# FASCICULE DE BREVET EUROPEEN

(11) **EP 2 288 518 B1**
(45) Date de publication et mention de la délivrance du brevet: **21.12.2011**
(21) Numéro de dépôt: 09769527.4
(22) Date de dépôt: 12.06.2009
(51) Int. Cl.: B60R 5/04

(54) **DISPOSITIF CACHE-BAGAGES COMPORTANT UNE POIGNEE DE TIRAGE PERFECTIONNEE**
LASTRAUMABDECKUNG MIT EINEM VERBESSERTEN ZUGGRIFF
LOAD SPACE COVER DEVICE WITH AN IMPROVED PULL HANDLE

(30) Priorité: 27.06.2008 FR 0854336
(43) Date de publication de la demande: 02.03.2011
(73) Titulaire: Renault S.A.S., 92100 Boulogne-Billancourt (FR)
(72) Inventeur: MOSSU, Stephane, F-78114 Magny-les-Hameaux (FR)
(86) Numéro de dépôt international: PCT/FR2009/051115
(87) Numéro de publication internationale: WO 2009/156686

(56) Documents cités:
- EP-B1- 1 595 746
- DE-A1- 10 222 064
- DE-C1- 10 218 838
- DE-C1- 19 707 676

## Description

L'invention concerne un dispositif cache-bagages pour véhicule automobile comportant un élément d'occultation en matériau souple apte à occuper une configuration d'utilisation plan et horizontale, une ouverture formant moyen de préhension étant ménagée dans l'élément d'occultation.

Cependant, lorsque le dispositif cache-bagages est dans sa configuration d'utilisation dans laquelle il occulte le contenu du coffre, il demeure quand même possible de voir à l'intérieur du coffre à travers l'ouverture formant le moyen de préhension.

La publication EP-B1-1595746 décrit un dispositif cache-bagages comportant une poignée de tirage formée par une ouverture délimitée par un cadre. Un volet pivotant est rapporté sur la poignée de tirage de manière à pouvoir occulter l'ouverture de la poignée et ainsi le contenu du coffre. Le volet est monté à pivotement sur un bord du cadre de la poignée dont il est solidaire.

Cependant, ce dispositif présente un inconvénient : il est nécessaire de prévoir une pièce rapportée de forme complexe dont le processus de fabrication peut être compliqué et cher.

Afin de pallier ces inconvénients, l'invention a pour objet un dispositif cache-bagages comportant une ouverture formant poignée de préhension présentant des moyens d'occultation simples et peu onéreux.

A cet effet, l'invention propose un dispositif cache-bagages du type cité ci-dessus, caractérisé en ce que l'ouverture est munie d'un volet de fermeture monté pivotant autour d'un axe porté par un bord de l'ouverture, ledit volet étant formé par une extension de l'élément d'occultation faisant saillie à l'intérieur de ladite ouverture.

Selon d'autres caractéristiques de l'invention:
- Le volet de fermeture passe d'une position fermée dans laquelle il s'étend selon le plan de l'élément d'occultation de façon à recouvrir l'ouverture à une position d'utilisation dans laquelle l'ouverture est au moins en partie dégagée par une poussée effectuée sur ledit volet de manière à le faire pivoter autour de son axe.
- Après suppression de la poussée effectuée à l'encontre du volet, ledit volet de fermeture passe automatiquement de sa position d'utilisation à sa position fermée.
- L'ouverture est formée par une découpe sensiblement linéaire en forme de U ménagée dans l'élément d'occultation.
- Un espace est prévu entre le bord de l'ouverture et le bord libre du volet.
- L'ouverture est délimitée par un cadre rapporté.
- Le cadre est composé de deux parties disposées sur chaque face de l'élément d'occultation, de manière à prendre ledit élément d'occultation en sandwich.
- Le cadre est monté par clippage collage, agrafage ou vissage sur l'élément d'occultation.
- L'axe de pivotement du volet est confondu avec un bord interne du cadre.

D'autres caractéristiques et avantages de l'invention apparaîtront à la lecture de la description d'exemples de réalisation d'un dispositif cache-bagages en référence aux dessins annexés dans lesquels :
- La figure 1 est une vue d'un dispositif cache-bagages selon un premier mode de réalisation de l'invention.
- La figure 2 est une vue d'un dispositif cache-bagages selon un deuxième mode de réalisation de l'invention.
- La figure 3 est une vue en coupe selon la direction III-III de la figure 1 d'un détail du dispositif cache-bagage dans une première configuration.
- La figure 4 est une vue du détail de la figure 3 dans une seconde configuration.

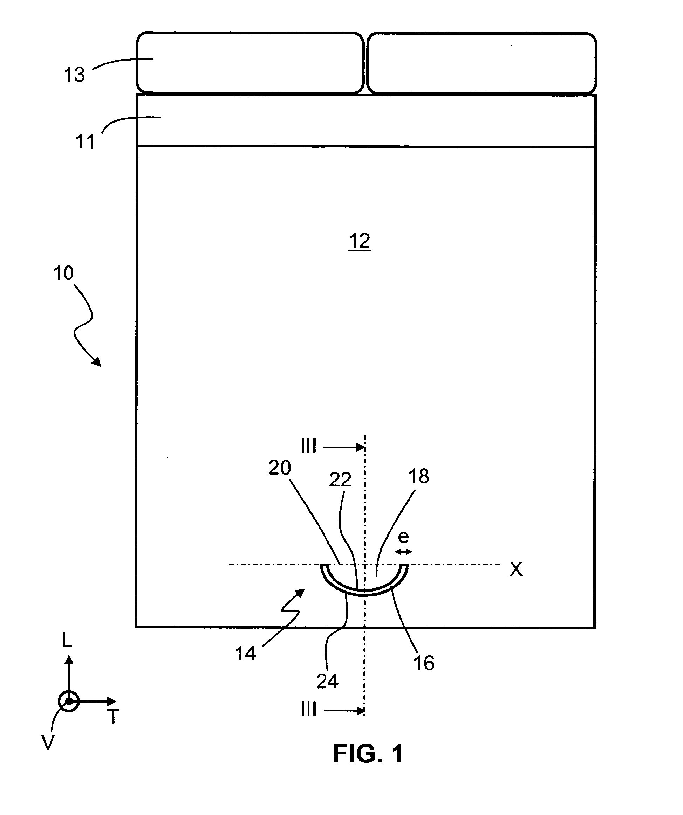

Dans la description qui suit, nous prendrons à titre non limitatif une orientation longitudinale, verticale et transversale indiquée par le trièdre L,V,T des figures 1 à 4.

Tel que représenté à la figure 1, un véhicule automobile (non représenté) comporte un dispositif cache-bagages 10.

Le dispositif cache-bagages 10 comporte un élément occultant souple 12 apte à occuper une configuration rangée (non représentée) dans laquelle il est enroulé dans un carter 11 situé contre ou à proximité de dossiers de sièges arrière 13 et une configuration d'utilisation, représentée à la figure 1, dans laquelle il s'étend horizontalement entre lesdits sièges 13 et une porte (non représentée) du coffre du véhicule de façon à cacher le contenu du coffre.

Le dispositif cache-bagages 10 comporte en outre un moyen de préhension 14 constitué par une ouverture 16 ménagée dans l'élément occultant 12.

De façon que le contenu du coffre ne soit pas visible par l'ouverture 16, il est prévu un volet 18 de fermeture de ladite ouverture 16.

Le volet 18 est formé par une extension de l'élément occultant 12 saillant à l'intérieur de l'ouverture 16. Ledit volet 18 est donc formé d'une pièce avec l'élément occultant 12.

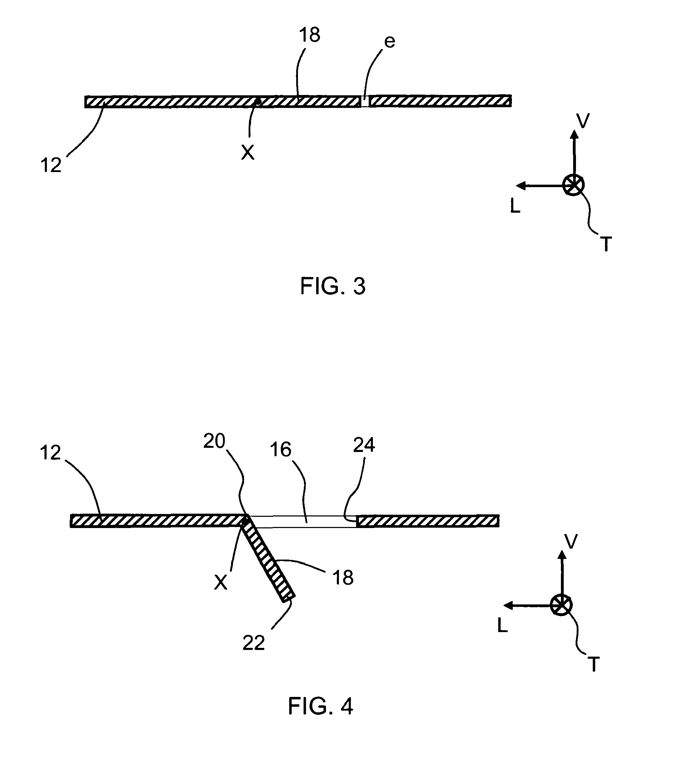

Ainsi, tel que représenté aux figure 3 et 4, le volet 18 est articulé à un bord 20 de l'ouverture 16 et est apte à pivoter autour d'un axe transversal X entre une position de repos dans laquelle il s'étend selon un plan sensiblement confondu avec celui de l'élément d'occultation 12 de manière à recouvrir l'ouverture 16, et une position de dégagement de l'ouverture 16 dans laquelle le volet 18 s'étend selon un plan incliné par rapport à celui de l'élément d'occultation 12.

L'ouverture 16 est formée ici par une découpe linéaire sensiblement en forme de U, visible à la figure 1, ménagée dans l'élément occultant 12.

Un espace e, qui peut être de l'ordre de quelques millimètres, est ménagé entre un bord libre 22 du volet 18 et un bord 24 de l'ouverture 16.

Ainsi, lorsqu'un utilisateur souhaite utiliser le moyen de préhension, il pose ses doigts sur le volet 18 en position de recouvrement de l'ouverture 16 et exerce une pression à l'encontre dudit volet 18 pour le faire pivoter autour de son axe X. Une fois ses doigts positionnés à l'intérieur de l'ouverture 16 et en appui contre le bord 24 de ladite ouverture 16, l'utilisateur peut alors tirer sur le cache-bagage 10 pour le faire passer de sa configuration rangée à sa configuration d'utilisation, par exemple.

Lorsque l'utilisateur retire ses doigts de l'ouverture 16 et n'exerce plus d'appui sur le volet 18, ledit volet 18 revient automatiquement par pivotement autour de son axe X vers sa position initiale de repos et recouvre à nouveau l'ouverture 16.

Ainsi, le matériau formant l'élément occultant 12 du cache-bagages 10 est à la fois suffisamment souple et élastique pour que le bord 20 de l'ouverture 16 forme une charnière et que le volet 18 puisse revenir automatiquement en position de recouvrement de l'ouverture 16 et à la fois suffisamment rigide pour que ledit volet 18 reste naturellement, lorsqu'il est dans sa position de repos, dans l'alignement du plan formé par l'élément d'occultation 12.

La présence de l'espace e entre le bord libre 24 du volet 18 et le bord 22 de l'ouverture 16 permet de faire pivoter plus facilement le volet 18. En effet, les bords 24 et 22 ne risquent pas de s'accrocher ensemble lors du mouvement de pivotement du volet 18. De plus, l'espace e permet à l'utilisateur de discerner plus facilement la présence de l'ouverture 16, même sans regarder le moyen de préhension.

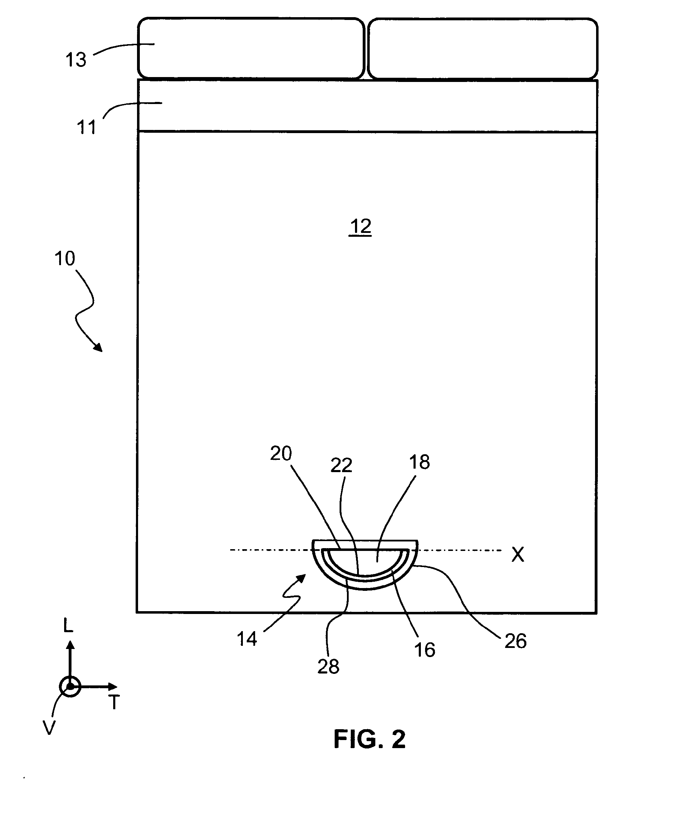

En outre, tel que représenté à la figure 2, l'ouverture 16 peut être délimitée par un cadre rapporté 26. Le cadre 26 peut être monté par clippage, collage, agrafage ou vissage par exemple. Il peut aussi comporter deux parties distinctes, disposées de chaque côté de l'élément d'occultation et prendre ainsi en sandwich les bords 20 et 22 de l'ouverture 16.

La présence du cadre 26 permet de rigidifier les bord 20 et 22 de l'ouverture 16 et ainsi d'éviter de les abîmer, mais permet également de faciliter la préhension en rendant l'ouverture 16 plus ergonomique. Le cadre 26 permet également de donner un aspect plus esthétique à l'ouverture 16 en améliorant sa qualité de finition.

Ainsi, dans le cas où l'ouverture 16 comporte un cadre 26, l'axe de pivotement X se situe au niveau d'un bord interne du cadre 26.

Le dispositif cache-bagage selon l'invention présente donc l'avantage d'être simple et peu onéreux.

En effet, le procédé de fabrication du moyen de préhension est peu complexe :
Ainsi, dans une première étape, une découpe en U est ménagée dans l'élément occultant 12. Puis, dans le cas du deuxième mode de réalisation de la figure 2, dans une deuxième étape, le cadre 26 est rapporté autour de l'ouverture 16 par clippage, agrafage, collage ou vissage, par exemple.

En outre, le cadre 26 tel que décrit étant une pièce de forme simple son procédé de moulage est donc peu complexe et peu onéreux.

## Revendications

1. Dispositif cache-bagages (10) pour véhicule automobile comportant un élément d'occultation (12) en matériau souple apte à occuper une configuration d'utilisation plane et horizontale, une ouverture (16) formant moyen de préhension étant ménagée dans l'élément d'occultation (12), **caractérisé en ce que** l'ouverture (16) est munie d'un volet de fermeture (18) monté pivotant autour d'un axe (X) porté par un bord (20) de l'ouverture (16), ledit volet (18) étant formé par une extension de l'élément d'occultation (12) faisant saillie à l'intérieur de ladite ouverture (16).

2. Dispositif cache-bagages (10) selon la revendication 1, **caractérisé en ce que** le volet de fermeture (18) passe d'une position fermée dans laquelle il s'étend selon le plan de l'élément d'occultation (12) de façon à recouvrir l'ouverture (16) à une position d'utilisation dans laquelle l'ouverture (16) est au moins en partie dégagée, par une poussée effectuée sur ledit volet (18) de manière à le faire pivoter autour de son axe (X).

3. Dispositif cache-bagages (10) selon la revendication précédente, **caractérisé en ce que**, après suppression de la poussée effectuée à l'encontre du volet (18), ledit volet de fermeture (18) passe automatiquement de sa position d'utilisation à sa position fermée.

4. Dispositif cache-bagages (10) selon l'une quelconque des revendications précédentes, **caractérisé en ce que** l'ouverture (16) est formée par une découpe sensiblement linéaire en forme de U ménagée dans l'élément d'occultation (12).

5. Dispositif de cache-bagages (10) selon l'une quelconque des revendications précédentes, **caractérisé en ce qu'**un espace (e) est prévu entre le bord (22) de l'ouverture (16) et le bord libre (24) du volet (18).

6. Dispositif cache-bagages (10) selon l'une quelconque des revendications précédentes, **caractérisé en ce que** l'ouverture (16) est délimitée par un cadre rapporté (26).

7. Dispositif cache-bagages (10) selon la revendication précédente, **caractérisé en ce que** le cadre (26) est composé de deux parties disposées sur chaque face de l'élément d'occultation (12), de manière à prendre ledit élément d'occultation (12) en sandwich.

8. Dispositif cache-bagages selon l'une quelconque des revendications 6 ou 7, **caractérisé en ce que** le cadre (26) est monté par clippage, collage, agrafage ou vissage sur l'élément d'occultation (12).

9. Dispositif cache-bagages (10) selon l'une quelconque des revendications 6 à 8, **caractérisé en ce que** l'axe de pivotement (X) du volet (18) est confondu avec un bord interne du cadre (26).

## Claims

1. Luggage cover device (10) for a motor vehicle, comprising a concealing element (12) made of flexible material and able to take up a flat and horizontal use configuration, an opening (16) forming a grasping means being formed in the concealing element (12), **characterized in that** the opening (16) is provided with a closure flap (18) that is mounted such that it can pivot about an axis (X) that runs along one edge (20) of the opening (16), said flap (18) being formed by an extension of the concealing element (12) that protrudes into the interior of said opening (16).

2. Luggage cover device (10) according to Claim 1, **characterized in that** the closure flap (18) passes from a closed position, in which it extends in the plane of the concealing element (12) so as to cover the opening (16), to a use position, in which the opening (16) is at least partly uncovered, by said flap (18) being pushed so as to pivot it about its axis (X).

3. Luggage cover device (10) according to the preceding claim, **characterized in that**, when pushing on the flap (18) ceases, said closure flap (18) automatically passes from its use position into its closed position.

4. Luggage cover device (10) according to any one of the preceding claims, **characterized in that** the opening (16) is formed by an approximately linear, U-shaped cutout in the concealing element (12).

5. Luggage cover device (10) according to any one of the preceding claims, **characterized in that** a space (e) is provided between the edge (22) of the opening (16) and the free edge (24) of the flap (18).

6. Luggage cover device (10) according to any one of the preceding claims, **characterized in that** the opening (16) is bounded by an attached frame (26).

7. Luggage cover device (10) according to the preceding claim, **characterized in that** the frame (26) consists of two parts located on each face of the concealing element (12) so as to sandwich said concealing element (12).

8. Luggage cover device according either one of Claims 6 and 7, **characterized in that** the frame (26) is fitted to the concealing element (12) by clip-fastening, adhesive bonding, stapling or screwing.

9. Luggage cover device (10) according to any one of Claims 6 to 8, **characterized in that** the pivot axis (X) of the flap (18) coincides with an inner edge of the frame (26).

## Patentansprüche

1. Laderaumabdeckung (10) für ein Kraftfahrzeug mit einem Verdeckelement (12) aus einem flexiblen Material, das eine ebene und horizontale Gebrauchskonfiguration einnehmen kann, wobei eine Öffnung (16), die ein Zugreifmittel bildet, in dem Verdeckelement (12) ausgebildet ist, **dadurch gekennzeichnet, dass** die Öffnung (16) mit einer Verschlussklappe (18) versehen ist, die schwenkbar um eine Achse (X) an einem Rand (20) der Öffnung (16) angebracht ist, wobei die Klappe (18) durch eine Verlängerung des Verdeckelements (12) gebildet wird, die in das Innere der Öffnung (16) ragt.

2. Laderaumabdeckung (10) nach Anspruch 1, **dadurch gekennzeichnet, dass** die Verschlussklappe (18) aus einer geschlossenen Stellung, in der sie sich entlang der Ebene des Verdeckelements (12) erstreckt, um die Öffnung (16) zu bedecken, in eine Gebrauchsstellung passiert, in der die Öffnung (16) zumindest teilweise durch Druckkraft freigegeben wird, die an die Klappe (18) angelegt wird, um sie um die Achse (X) zu schwenken.

3. Laderaumabdeckung (10) nach dem vorhergehenden Anspruch, **dadurch gekennzeichnet, dass** nach Aufhebung der an die Klappe (18) angelegten Druckkraft die Verschlussklappe (18) automatisch aus ihrer Gebrauchsstellung in ihre geschlossene Stellung passiert.

4. Laderaumabdeckung (10) nach einem der vorhergehenden Ansprüche, **dadurch gekennzeichnet, dass** die Öffnung (16) durch einen im Wesentlichen linearen, U-förmigen Schnitt gebildet wird, der in dem Verdeckelement (12) ausgebildet ist.

5. Laderaumabdeckung (10) nach einem der vorhergehenden Ansprüche, **dadurch gekennzeichnet, dass** zwischen dem Rand (22) der Öffnung (16) und dem freien Rand (24) der Klappe (18) ein Zwischenraum (e) vorgesehen ist.

6. Laderaumabdeckung (10) nach einem der vorhergehenden Ansprüche, **dadurch gekennzeichnet, dass** die Öffnung (16) durch einen angefügten Rahmen (26) begrenzt wird.

7. Laderaumabdeckung (10) nach dem vorhergehenden Anspruch, **dadurch gekennzeichnet, dass** der Rahmen (26) aus zwei Teilen besteht, die auf jeder Seite des Verdeckelements (12) so angeordnet sind, dass sie das Verdeckelement (12) zwischen sich einklemmen.

8. Laderaumabdeckung nach Anspruch 6 oder 7, **dadurch gekennzeichnet, dass** der Rahmen (26) durch Rastverriegelung, Verklebung, Verklammern oder Verschrauben an dem Verdeckelement (12) angebracht ist.

9. Laderaumabdeckung (10) nach einem der Ansprüche 6 bis 8, **dadurch gekennzeichnet, dass** die Schwenkachse (X) der Klappe (18) mit einem Innenrand des Rahmens (26) zusammenfällt.
